# EUROPEAN PATENT SPECIFICATION

(11) **EP 3 388 537 B1**
(45) Date of publication and mention of the grant of the patent: **01.01.2020**
(21) Application number: 16872700.6
(22) Date of filing: 11.10.2016
(51) Int. Cl.: C21D 8/12, C22C 38/00

(54) **METHOD FOR PRODUCING NON-ORIENTED ELECTRICAL STEEL SHEET**
VERFAHREN ZUR HERSTELLUNG VON UNGERICHTETEN ELEKTROMAGNETISCHEN STAHLBLECHEN
PROCÉDÉ DE FABRICATION DE TÔLE D'ACIER ÉLECTROMAGNÉTIQUE NON DIRECTIONNEL

(30) Priority: 09.12.2015 JP 2015240390
(43) Date of publication of application: 17.10.2018
(73) Proprietor: JFE Steel Corporation, Tokyo 100-0011 (JP)
(72) Inventor: OKUBO Tomoyuki, Tokyo 100-0011 (JP); ZAIZEN Yoshiaki, Tokyo 100-0011 (JP); ODA Yoshihiko, Tokyo 100-0011 (JP)
(74) Representative: Hoffmann Eitle
(86) International application number: PCT/JP2016/080072
(87) International publication number: WO 2017/098800

(56) References cited:
- EP-A1- 2 025 767
- EP-A1- 2 657 355
- EP-A1- 2 894 232
- CN-A- 103 451 399
- JP-A- S5 794 524
- JP-A- 2012 132 070
- JP-A- 2014 173 099
- JP-A- 2014 173 099

## Description

### TECHNICAL FIELD

This invention relates to a method for producing a non-oriented electrical steel sheet, and more particularly to a method for producing a non-oriented electrical steel sheet having a high magnetic flux density.

### RELATED ART

In recent years, energy saving has been promoted from a viewpoint of global environment protection, and higher efficiency and downsizing are also directed in the field of electric instruments. As a result, non-oriented electrical steel sheets widely used as an iron core material for the electric instruments are strongly demanded to have a high magnetic flux density and a low iron loss.

In order to increase the magnetic flux density in the non-oriented electrical steel sheet, it is known effective to improve a texture of a product sheet, or decrease grains of {111} orientation and/or increase grains of {110} or {100} orientation. In the conventional production process of the non-oriented electrical sheet, the magnetic flux density is increased by increasing a crystal grain size before a cold rolling or optimizing a cold rolling reduction to improve the texture.

As another means for controlling the texture of the product sheet is mentioned a method of increasing a heating rate in recrystallization annealing. This method is often used in the production of grain-oriented electrical steel sheets, which is based on the fact that an iron loss is improved by increasing a heating rate in decarburization annealing (primary recrystallization annealing) to increase grains of {110} orientation in the steel sheet after the decarburization annealing and refining secondary recrystallized grains of the steel sheet after finish annealing (for example, see Patent Documents 1 and 6).

Even in the non-oriented electrical steel sheets is proposed a technique for improving the texture and increasing the magnetic flux density by increasing a heating rate in recrystallization annealing (finish annealing) (for example, see Patent Documents 2-5).

### PRIOR ART DOCUMENTS

### PATENT DOCUMENTS

Patent Document 1: JP-A-H01-290716
Patent Document 2: JP-A-H02-011728
Patent Document 3: JP-A-2011-256437
Patent Document 4: JP-A-2012-132070
Patent Document 5: JP-A-2013-010982 Patent Document 6: JP-A-2014 173 099

### SUMMARY OF THE INVENTION

### TASK TO BE SOLVED BY THE INVENTION

However, the technique disclosed in Patent Document 1 relates to the grain-oriented electrical steel sheet and cannot be applied to a non-oriented electrical steel sheet as it is.

Although a rapid heating is conducted in the technique proposed in Patent Document 2, it is clear that when an induction heating not adopted in the Patent Document 2 is applied, an effect of increasing the magnetic flux density cannot be stably obtained as a result of the inventors' verification.

The technique proposed in Patent Document 3 utilizes an induction heating, but the effect of stably increasing the magnetic flux density cannot be obtained by this technique as a result of the inventors' verification. Also, this technique is required to conduct cooling and reheating after the rapid heating, so that there is a problem that the production cost and equipment cost become higher.

In the techniques proposed in Patent Documents 4 and 5, rapid heating is conducted by an electric heating. In the electric heating, however, sparks are generated between a conductor roll and a steel sheet to easily cause surface defects, which causes a problem if the technique is applied to a finish annealing for a non-oriented electrical steel sheet.

The invention is made in view of the above problems inherent to the conventional techniques, and an object thereof is to propose a method for producing a non-oriented electrical steel sheet which is capable of stably attaining a higher magnetic flux density even when the heating in the finish annealing is a rapid heating by an induction heating.

### SOLUTION FOR TASK

The inventors have made various studies focusing on heating conditions in the finish annealing, especially conditions of an induction heating and a radiation heating to solve the above task. As a result, it has been found out that it is effective for increasing the magnetic flux density by performing the heating in the finish annealing two stages of performing an induction heating and subsequently a radiation heating, conducting the induction heating up to not lower than 720°C at an average heating rate of not less than 50°C/sec between 600°C and 700°C, and setting a time from the end of the induction heating to the start of the radiation heating to not more than 3 seconds.

That is, the invention which is given by claim 1, proposes a method for producing a non-oriented electrical steel sheet by inter alia hot rolling a steel slab having a chemical composition comprising C: not more than 0.005 mass%, Si: not more than 5.0 mass%, Mn: not more than 3.0 mass%, P: not more than 0.2 mass%, S: not more than 0.005 mass%, Al: not more than 3.0 mass%, N: not more than 0.005 mass%, Ni: not more than 3.0 mass%, Cr: not more than 5.0 mass%, Ti: not more than 0.005 mass%, Nb: not more than 0.005 mass%, B: not more than 0.005 mass%, O: not more than 0.005 mass% and the remainder being Fe and inevitable impurities and subjecting the sheet to a cold rolling after a hot band annealing or without a hot band annealing and then to a finish annealing, characterized in that heating in the finish annealing is conducted in two stages of performing an induction heating and subsequently a radiation heating and the induction heating is conducted up to not lower than 720°C at an average heating rate of not less than 50°C/sec between 600°C and 700°C and a time from the end of the induction heating to the start of the radiation heating is set to not more than 3 seconds.

The steel slab used in the method for producing a non-oriented electrical steel sheet according to the invention is characterized by containing one or two selected from Sn: 0.005-0.20 mass% and Sb: 0.005-0.20 mass% in addition to the above chemical composition.

The steel slab used in the method for producing a non-oriented electrical steel sheet according to the invention is characterized by containing one or two or more selected from Ca: 0.0001-0.010 mass%, Mg: 0.0001-0.010 mass% and REM: 0.0001-0.010 mass% in addition to the above chemical composition.

The method for producing a non-oriented electrical steel sheet according to the invention is characterized in that a ferrite grain size of a steel sheet structure before a final cold rolling in the cold rolling is set to not more than 70 µm.

### EFFECT OF THE INVENTION

According to the invention, it is possible to stably provide a non-oriented electrical steel sheet having a high magnetic flux density.

### BRIEF DESCRIPTION OF THE DRAWINGS

FIG. 1 is a diagram showing a heating pattern at 200°C/sec.
FIG. 2 is a graph showing an influence of an achieving temperature by an induction heating (end temperature) upon a magnetic flux density B₅₀ when a time from an end of an induction heating to a start of a radiation heating is set to 2 seconds.
FIG. 3 is a graph showing an influence of a time from an end of an induction heating to a start of a radiation heating upon a magnetic flux density B₅₀ when an achieving temperature by an induction heating is 740°C.

### EMBODIMENTS FOR CARRYING OUT THE INVENTION

There will be described an experiment building a momentum for developing the invention.

A steel containing C: 0.0025 mass%, Si: 1.42 mass%, Mn: 0.42 mass%, P: 0.07 mass%, S: 0.0016 mass%, Al: 0.0002 mass%, N: 0.0018 mass%, Ni: 0.01 mass%, Cr: 0.02 mass%, Ti: 0.0018 mass%, Nb: 0.0006 mass%, B: 0.0001 mass% and O: 0.0023 mass% is melted in a vacuum furnace to form a steel ingot, which is then hot rolled to form a hot rolled sheet having a sheet thickness of 2.3 mm. In this case, it has been confirmed that the hot rolled sheet is completely recrystallized and has a ferrite grain size of 20-30 µm.

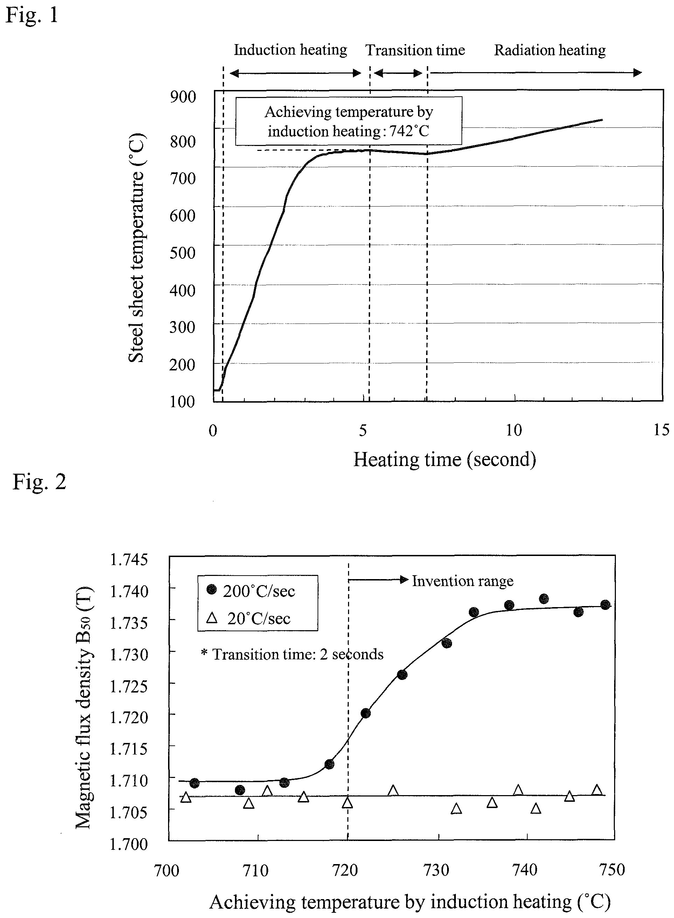

Next, the hot rolled sheet is pickled and cold rolled to form a cold rolled sheet having a final sheet thickness of 0.5 mm, which is then subjected to a finish annealing (recrystallization annealing) under various heating conditions. The finish annealing is conducted in two stages of heating in a solenoid type induction heating furnace and subsequently heating in an electric furnace (radiation heating furnace), wherein an average heating rate between 600°C and 700°C is set to two levels of 20°C/sec and 200°C/sec. In this case, an atmosphere is a dry nitrogen atmosphere. Moreover, a heating pattern at 200°C/sec is shown in FIG. 1.

From the steel sheet after the finish annealing are taken out test specimens of 280 mm × 30 mm in a rolling direction and a widthwise direction as a longitudinal direction to measure a magnetic flux density B₅₀ by an Epstein test in accordance with JIS C2550-1 (2011) and evaluate magnetic properties thereof.

FIG. 2 shows an influence of an achieving temperature by an induction heating (end temperature) upon the magnetic flux density B₅₀ when a time from an end of the induction heating to a start of a radiation heating (transition time) is set to 2 seconds. As seen from this figure, the magnetic flux density is largely increased by setting the achieving temperature to not lower than 720°C.

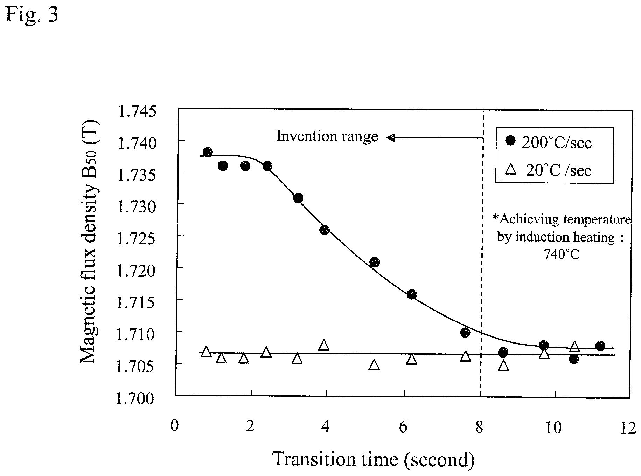

FIG. 3 shows an influence of a time from the end of the induction heating to the start of the radiation heating (transition time) upon the magnetic flux density B₅₀ when the achieving temperature by the induction heating is 740°C. As seen from this figure, the magnetic flux density is increased by setting the transition time to not more than 3 seconds.

From the above experimental results, it is revealed that in order to obtain an effect of stably increasing the magnetic flux density by the heating system of conducting the induction heating and then the radiation heating, it is necessary to increase the achieving temperature by the induction heating to not lower than 700°C and shorten the transition time from the end of the induction heating to the radiation heating to not more than 3 seconds.

Heretofore, there are many proposals on the technique for increasing a magnetic flux density of a grain-oriented electrical steel sheet by conducting rapid heating in the finish annealing, but the abovementioned knowledge is not reported until now. As to differences between a non-oriented electrical steel sheet and a grain-oriented electrical steel sheet, the inventors have thought as follows.

A grain-oriented electrical steel sheet is produced by using a raw material (slab) containing a large amount of a hard second phase such as carbide, inhibitor or the like in its ferrite structure to stably develop a secondary recrystallization. When a steel sheet obtained from the raw material containing such a second phase is subjected to cold rolling, local crystal rotation is caused in a ferrite around the second phase, which is easily rendered in a nucleating site for recrystallization.

On the contrary, since such a second phase is hardly contained in a non-oriented electrical steel sheet, in order to cause recrystallization by finish annealing after the cold rolling, it is required to heat the sheet up to a higher temperature. In the general solenoid type induction heating, however, the heating efficiency rapidly falls in the vicinity of a Curie point of the raw material, so that the non-oriented electrical steel sheet cannot be rapidly heated to a temperature zone enough to cause recrystallization by the induction heating. Therefore, it is considered that an effect of improving a texture cannot be obtained sufficiently by the rapid heating.

When the rapid heating is conducted by the induction heating, therefore, an achieving temperature by the induction heating is increased as much as possible and the subsequent radiation heating is started immediately to continue the rapid heating up to a higher temperature, whereby the recrystallization is promoted. This is considered to be a key point for controlling the texture of the non-oriented electrical steel sheet.

The chemical composition of the non-oriented electrical steel sheet (product sheet) according to the invention will be explained below.

### C: not more than 0.0050 mass%

C is a harmful element causing magnetic aging to form a carbide deteriorating an iron loss property in the product sheet. In order to suppress the magnetic aging, C is limited to not more than 0.0050 mass%. Preferably, it is not more than 0.0030 mass%.

### Si: not more than 5.0 mass%

Si has an effect of increasing a specific resistance of steel to reduce an iron loss and thus is preferable to be added in an amount of not less than 0.1 mass%. Preferably, it is not less than 1.0 mass%. However, an addition exceeding 5.0 mass% causes hardening of the steel and makes rolling difficult, so that the upper limit of Si is set to 5.0 mass%. A preferable upper limit is 4.0 mass%. Moreover, Si reduces the iron loss but also decreases the magnetic flux density, and thus when the magnetic flux density is considered to be important, it is preferably not more than 3.0 mass%.

### Mn: not more than 3.0 mass%

Mn has not only an effect of increasing a specific resistance of steel to reduce an iron loss but also an effect of preventing hot brittleness, so that it is preferable to be added in an amount of not less than 0.05 mass%. More preferably, it is not less than 0.1 mass%. However, an addition exceeding 3.0 mass% causes precipitation of a carbonitride and rather deteriorates the iron loss property, so that an upper limit of Mn is 3.0 mass%. A preferable upper limit is 1.0 mass%. Moreover, an addition exceeding 2.0 mass% largely decreases the magnetic flux density similarly to Si, so that when the magnetic flux density is considered to be important, it is preferably not more than 2.0 mass%.

### P: not more than 0.2 mass%

P is an element used for controlling a hardness (punchability) of steel. When it is added in an amount exceeding 0.2 mass%, however, steel is embrittled to make rolling difficult, so that the upper limit of P is set to 0.2 mass%. It is preferably not more than 0.1 mass%, more preferably not more than 0.04 mass%.

### Al: not more than 3.0 mass%

Al has an effect of increasing a specific resistance of steel to reduce an iron loss similarly to Si. When it exceeds 3.0 mass%, however, steel is hardened to make rolling difficult, and thus the upper limit is set to 3.0 mass%.

Moreover, when the Al content is in a range of 0.01 to 0.1 mass%, fine AIN is precipitated to deteriorate the iron loss property. Also, when Al is decreased to not more than 0.01 mass%, the texture is improved to increase the magnetic flux density. Accordingly, when the magnetic flux density is considered to be important instead of the iron loss property, Al is preferably not more than 0.01 mass%. More preferably, it is not more than 0.003 mass%. On the other hand, when the iron loss property is considered to be important instead of the magnetic flux density, Al preferably falls within a range of 0.1 to 3.0 mass%. More preferably, it falls in a range of 0.1 to 2.0 mass%.

### Ni: not more than 3.0 mass%

Ni is an element effective for adjusting the strength of steel and increasing the magnetic flux density. However, Ni is an expensive element, and an addition exceeding 3.0 mass% brings about the increase of raw material cost, so that the upper limit is set to 3.0 mass%. It is preferably not more than 1.0 mass%, more preferably not more than 0.5 mass%.

### Cr: not more than 5.0 mass%

Cr has an effect of increasing a specific resistance of steel to reduce an iron loss. However, an addition exceeding 5.0 mass% brings about precipitation of carbonitride and adversely deteriorates the iron loss property, so that the upper limit of Cr is set to 5.0 mass%. It is preferably not more than 2.0 mass%, more preferably not more than 1.0 mass%.

### Each of S, N, Ti, Nb, B and O: not more than 0.005 mass%

S, N, Ti, Nb, B and O are harmful elements forming fine precipitates of carbide, nitride, sulfide, boride, oxide and so on to deteriorate the iron loss property. In particular, when each content of the above elements exceeds 0.005 mass%, the above bad influence becomes remarkable. Accordingly, the upper limit of the each element is 0.005 mass%. Preferably, it is not more than 0.003 mass%. Moreover, Ti, Nb and B may be intentionally added for fixing nitrogen, but the amount is necessary to be within the above range even in this case.

The non-oriented electrical steel sheet according to the invention can contain the following ingredients in addition to the aforementioned ingredients.

### One or two selected from Sn: 0.005-0.20 mass% and Sb: 0.005-0.20 mass%

Sn and Sb have an effect of improving recrystallization texture to improve the magnetic flux density and iron loss property. In order to obtain the above effect, each element is preferable to be added in an amount of not less than 0.005 mass%. However, when each element is added in an amount exceeding 0.20 mass%, the above effect is saturated. Therefore, each addition amount of Sn and Sb is preferable to fall within a range of 0.005 to 0.20 mass%. More preferably, it is a range of 0.01 to 0.1 mass%.

### One or two or more selected from Ca: 0.0001-0.010 mass%, Mg: 0.0001-0.010 mass%, REM: 0.0001-0.010 mass%

Ca, Mg and REM have an effect of forming and fixing stable sulfides and/or selenides with S and/or Se to improve the grain growth. In order to obtain the above effect, each element is preferable to be added in an amount of not less than 0.0001 mass%. When it is added in an amount exceeding 0.010 mass%, however, the iron loss property is adversely deteriorated, so that the upper limit is preferably set to 0.010 mass%. More preferably, it falls within a range of 0.0010 to 0.0050 mass%.

Next, the production method of the non-oriented electrical steel sheet according to the invention will be described below.

A steel adjusted to have the aforementioned chemical composition is melted by a well-known refining process such as a converter-vacuum degassing treatment or the like and then shaped into a steel material (slab) by a well-known method such as continuous casting method or the like.

Next, the steel material is subjected to a hot rolling. A reheating temperature of the slab prior to the hot rolling, a finish rolling end temperature in the hot rolling, a coiling temperature and so on are not particularly limited. However, it is preferable that the reheating temperature falls within a range of 1000 °C to 1200°C and the finish rolling end temperature falls within a range of 700°C to 900°C and the coiling temperature falls within in a range of 600°C to 800°C from a viewpoint of ensuring the magnetic properties and productivity.

Then, the steel sheet after the hot rolling (hot rolled sheet) is subjected to a hot band annealing, if required, and one cold rolling or two or more cold rollings interposing an intermediate annealing therebetween to form a cold rolled sheet having a final sheet thickness.

In the invention, it is important that a ferrite grain size of the steel sheet structure before the final cold rolling (structure before the final cold rolling) is preferably controlled to not more than 70 µm, more preferably not more than 50 µm in order to enhance the effect of the invention. Here, the above ferrite grain size is an average grain size obtained by measuring grain sizes in a cross-sectional texture of the steel sheet in the thickness direction through an intercept method.

The inventors have considered the reason why the application of the invention is preferable when the ferrite grain size of the steel sheet structure before the final cold rolling is not more than 70 µm as follows.

Since recrystallized grains having a {111} orientation are produced from the vicinity of the grain boundary of the steel sheet structure before the final cold rolling in the finish annealing, when the ferrite grain size of the structure before the final cold rolling is small, {111} recrystallized grains are increased in the structure after the cold rolling and recrystallization. Thus, it is considered that an effect of decreasing {111} grains by the rapid heating becomes remarkable.

In order to render the ferrite grain size before the final cold rolling in not more than 70 µm, it is preferable to omit the hot band annealing or intermediate annealing, and when such a treatment is conducted, it is preferable to decrease the annealing temperature as much as possible. From a viewpoint of preventing ridging, however, it is preferable that the recrystallization ratio of the steel sheet before the final cold rolling is controlled to not less than 80%. Moreover, there is a merit that a reduction of the production cost can be attained by decreasing the temperature in the hot band annealing or intermediate annealing or by omitting the hot band annealing or intermediate annealing.

Next, the cold rolled sheet having a given final sheet thickness is subjected to a finish annealing. In the invention, it is necessary that the heating in the finish annealing is performed in two stages of conducting an induction heating and then a radiation heating.

It is preferable that the induction heating is of solenoid type. It is because the solenoid type has a merit that a heating efficiency is high and a uniformity of the temperature in the widthwise direction is excellent.

Next, the conditions of the induction heating in the finish annealing will be explained.

The induction heating is used in a preceding stage of the heating process in the finish annealing. In order to obtain the effect according to the invention, it is necessary to set an average heating rate from 600°C to 700°C to not less than 50°C/sec. The more preferable heating rate is not less than 100°C/sec. The upper limit of the heating rate is not particularly limited, but is preferably set to not more than 1000°C/sec from a viewpoint of reducing the equipment cost. Moreover, an average heating rate in a temperature range of lower than 600°C is not particularly defined, but is preferably set to not less than 1 °C/sec, preferably not less than 10°C/sec from a viewpoint of the productivity.

The induction heating may be conducted by dividing into plural segments. Also, in order to reduce the equipment cost for the induction heating, the steel sheet is preheated by a radiation heating before the induction heating and then the induction heating may be applied only to a temperature range of the rapid heating. In this case, the upper limit of the preheating temperature is preferable to be set to not higher than 500°C from a viewpoint of recovery prevention.

In order to obtain the effect of the invention, an achieving temperature by the induction heating (end temperature) is necessary to be not lower than 720°C. Preferably, it is not lower than 735°C. Moreover, the heating efficiency violently drops in the vicinity of a Curie point of the material in the solenoid type induction heating, so that the induction heating furnace is desirably designed so as to heat by a large power in the vicinity of the Curie temperature. The upper limit of the achieving temperature by the induction heating is not particularly limited, but is desirable to be about 780°C from a viewpoint of suppressing the equipment cost.

Next, the conditions of the radiation heating followed to the induction heating will be explained below.

After the end of the induction heating, the radiation heating is performed up to a predetermined soaking temperature. In order to obtain the effect of the invention, a time from the end of the induction heating to the start of the radiation heating is necessary to be not more than 3 seconds. Moreover, a high-temperature radiation heating furnace is desirable to be arranged apart from the induction heating equipment from a viewpoint of protecting the induction heating equipment. It is difficult to satisfy the above conditions unless these equipment is designed intentionally.

It is also preferable that the steel sheet temperature is not decreased to not higher than 700°C from the end of the induction heating to the start of the radiation heating from a viewpoint of promoting recrystallization of {110} orientation grains or {100} orientation grains by the rapid heating. Such a condition can be easily attained by threading a dummy coil or the like in an annealing furnace to increase a furnace wall temperature between an induction heating furnace and a radiation heating furnace before the application of the invention. Moreover, the heating rate by the radiation heating is to be not less than 5°C/sec from a viewpoint of promoting the recrystallization. Such a condition can be easily fulfilled by using a usual radiation heating furnace. More preferably, it is not less than 10°C/sec.

Here, the "radiation heating" in the invention means a system for heating the steel sheet by radiation from a heating element such as a radiant tube, an electric heater or the like, and a heating system of heating only by radiation from the furnace wall is excluded. A heating method not using the heating element such as a radiant tube, an electric heater or the like may be used, but it is not realistic considering the industrial productivity.

It is preferable that a soaking temperature after being heated by the radiation heating falls within a range of 740°C to 1100°C and a soaking time falls within a range of 1 to 600 seconds. When the soaking temperature is lower than 740°C, the good iron loss property cannot be obtained, and when the soaking times is less than 1 second, the control of the soaking temperature during the operation is difficult. On the other hand, when the soaking temperature exceeds 1100°C, pick-up defects are frequently caused, and when the soaking time exceeds 600 seconds, the decrease of the productivity is caused. More preferably, the soaking temperature falls within 900°C to 1050°C, and the soaking time falls within 5 to 120 seconds.

An atmosphere in the finish annealing is preferable to be a non-oxidizing atmosphere or a reduced atmosphere. For example, it is to be a dry nitrogen atmosphere or a mixed atmosphere of hydrogen and nitrogen having P_{H2O}/P_{H2} of not more than 0.1, more preferably not more than 0.01.

Thereafter, the steel sheet after the finish annealing is coated with an insulation coating, if necessary, to form a product sheet. As the insulating coating may be used any one of a known organic, inorganic or organic-inorganic mixed coating according to the purpose.

### EXAMPLE

Each of steel slabs having various chemical compositions shown in Table 1 is reheated at 1100°C for 30 minutes and hot rolled at a finish rolling end temperature of 760°C to form a hot rolled sheet having a sheet thickness of 2.2 mm, which is coiled at a temperature of 650°C. Then, the hot rolled sheet is pickled after or without a hot band annealing for holding at a different soaking temperature for 30 seconds and cold rolled to form a cold rolled sheet having a final sheet thickness of 0.5 mm. In this case, recrystallization ratios of all the steel sheets before the final cold rolling are 100%.

Thereafter, the cold rolled sheet is subjected to a finish annealing with a continuous annealing facility made from a combination of a solenoid type induction heating furnace and a radiant tube type radiation heating furnace at 950°C for 10 seconds. In the induction heating furnace, an output power and a line speed are adjusted to control an achieving temperature in the induction heating furnace and a time up to the start of the radiation annealing. Moreover, the temperature drop from the end of the induction heating to the start of the radiation heating is within 10°C. Also, an atmosphere in the induction heating furnace is a dry nitrogen, and an atmosphere in the radiation heating furnace has H₂:N₂ = 20:80 by volume% and a dew point of -40°C (P_{H2O}/P_{H2} = 0.001), and an average heating rate up to a soaking temperature in the radiation heating furnace is set tol8°C/sec. Thereafter, an insulation coating is applied to form a product sheet.

From the thus obtained product sheet are taken out Epstein test specimens of 280 mm × 30 mm to measure magnetic properties (iron loss W_{15/50}, magnetic flux density B₅₀) by an Epstein test in accordance with JIS C2550-1 (2011). The measured results are shown in Table 2. Note that Steel Sheet No. 7 is actually Comparative rather than belonging to the invention as indicated.

As seen from these results, all of the steel sheets produced by the production method of the invention have excellent magnetic flux density and iron loss property. In particular, it can be seen that an increasing margin of the magnetic flux density B₅₀ is considerably large when the ferrite grain size of the structure before the final cold rolling is not more than 70 µm.

**Table 1**

| Steel symbol | Chemical composition (mass%) | | | | | | | | | | | | | | Remarks |
|---|---|---|---|---|---|---|---|---|---|---|---|---|---|---|---|
| | C | Si | Mn | P | S | Al | N | Ni | Cr | Ti | Nb | B | O | Others | |
| A | 0.0021 | 1.34 | 0.21 | 0.05 | 0.0018 | 0.0005 | 0.0016 | 0.01 | 0.01 | 0.0007 | 0.0005 | 0.0001 | 0.0023 | - | Invention steel |
| B | 0.0012 | 0.79 | 0.18 | 0.02 | 0.0012 | 0.62 | 0.0018 | 0.01 | 0.01 | 0.0008 | 0.0002 | 0.0001 | 0.0016 | - | Invention steel |
| C | 0.0018 | 2.89 | 0.25 | 0.01 | 0.0008 | 0.0002 | 0.0014 | 0.01 | 0.02 | 0.0012 | 0.0004 | 0.0002 | 0.0031 | - | Invention steel |
| D | 0.0013 | 1.06 | 1.05 | 0.01 | 0.0015 | 0.0003 | 0.0016 | 0.02 | 0.01 | 0.0014 | 0.0001 | 0.0001 | 0.0025 | - | Invention steel |
| E | 0.0015 | 1.31 | 0.12 | 0.02 | 0.0016 | 0.0001 | 0.0019 | 0.41 | 0.02 | 0.0011 | 0.0003 | 0.0002 | 0.0026 | - | Invention steel |
| F | 0.0014 | 1.26 | 0.28 | 0.01 | 0.0013 | 0.0004 | 0.0016 | 0.01 | 0.83 | 0.0015 | 0.0005 | 0.0002 | 0.0021 | - | Invention steel |
| G | 0.0009 | 1.32 | 0.18 | 0.06 | 0.0056 | 0.0002 | 0.0011 | 0.02 | 0.02 | 0.0005 | 0.0005 | 0.0001 | 0.0026 | - | Comparative steel |
| H | 0.0012 | 1.28 | 0.21 | 0.06 | 0.0016 | 0.0003 | 0.0058 | 0.01 | 0.01 | 0.0006 | 0.0003 | 0.0001 | 0.0024 | - | Comparative steel |
| I | 0.0015 | 1.33 | 0.22 | 0.04 | 0.0011 | 0.0001 | 0.0008 | 0.01 | 0.02 | 0.0004 | 0.0007 | 0.0002 | 0.0062 | - | Comparative steel |
| J | 0.0016 | 1.32 | 0.18 | 0.03 | 0.0012 | 0.0002 | 0.0013 | 0.01 | 0.01 | 0.0066 | 0.0004 | 0.0001 | 0.0028 | - | Comparative steel |
| K | 0.0011 | 1.24 | 0.28 | 0.05 | 0.0018 | 0.0001 | 0.0019 | 0.01 | 0.01 | 0.0002 | 0.0055 | 0.0001 | 0.0031 | - | Comparative steel |
| L | 0.0017 | 1.36 | 0.31 | 0.06 | 0.0016 | 0.0004 | 0.0015 | 0.02 | 0.01 | 0.0011 | 0.0002 | 0.0067 | 0.0038 | - | Comparative steel |
| M | 0.0013 | 1.53 | 0.18 | 0.04 | 0.0018 | 0.0063 | 0.0017 | 0.01 | 0.02 | 0.0008 | 0.0002 | 0.0018 | 0.0019 | - | Invention steel |
| N | 0.0016 | 1.41 | 0.25 | 0.02 | 0.0012 | 0.0003 | 0.0013 | 0.01 | 0.01 | 0.0012 | 0.0003 | 0.0002 | 0.0028 | Sn:0.031 | Invention steel |
| O | 0.0013 | 1.36 | 0.24 | 0.03 | 0.0014 | 0.0006 | 0.0009 | 0.02 | 0.01 | 0.0009 | 0.0001 | 0.0003 | 0.0019 | Sb:0.028 | Invention steel |
| P | 0.0014 | 1.31 | 0.23 | 0.05 | 0.0008 | 0.0004 | 0.0012 | 0.01 | 0.01 | 0.0008 | 0.0005 | 0.0001 | 0.0019 | Ca:0.0035 | Invention steel |
| Q | 0.0015 | 1.35 | 0.21 | 0.04 | 0.0009 | 0.0005 | 0.0016 | 0.01 | 0.01 | 0.0005 | 0.0002 | 0.0001 | 0.0026 | Mg:0.0013 | Invention steel |
| R | 0.0011 | 1.38 | 0.26 | 0.06 | 0.0013 | 0.0003 | 0.0015 | 0.01 | 0.01 | 0.0013 | 0.0003 | 0.0002 | 0.0033 | REM:0.0038 | Invention steel |

**Table 2**

| Steel Sheet No. | Steel symbol | Hot band annealing temperature (°C) | Ferrite grain size before final cold rolling (µm) | Conditions of finish annealing | | | Magnetic properties | | Remarks |
|---|---|---|---|---|---|---|---|---|---|
| | | | | Average heating rate between 600 and 700°C (°C/sec) | Achieving temperature by induction heating (°C) | Transition time from induction heating to radiation heating (sec) | Iron loss W_{15/50} (W/kg) | Magnetic flux density 8₅₀ (T) | |
| 1 | A | Absence | 25 | 20 | 740 | 2 | 3.83 | 1.706 | Comparative Example |
| 2 | A | Absence | 25 | 60 | 740 | 2 | 3.74 | 1.715 | Invention Example |
| 3 | A | Absence | 25 | 120 | 740 | 2 | 3.65 | 1.728 | Invention Example |
| 4 | A | Absence | 25 | 200 | 740 | 2 | 3.61 | 1.732 | Invention Example |
| 5 | A | Absence | 25 | 200 | 725 | 2 | 3.72 | 1.721 | Invention Example |
| 6 | A | Absence | 25 | 200 | 710 | 2 | 3.81 | 1.709 | Comparative Example |
| 7 | A | Absence | 25 | 200 | 740 | 4 | 3.69 | 1.718 | Invention Example |
| 8 | A | Absence | 25 | 200 | 740 | 9 | 3.82 | 1.707 | Comparative Example |
| 9 | A | 850 | 67 | 20 | 740 | 2 | 3.72 | 1.718 | Comparative Example |
| 10 | A | 850 | 67 | 200 | 740 | 2 | 3.62 | 1.735 | Invention Example |
| 11 | A | 920 | 89 | 20 | 740 | 2 | 3.64 | 1.726 | Comparative Example |
| 12 | A | 920 | 89 | 200 | 740 | 2 | 3.58 | 1.738 | Invention Example |
| 13 | B | Absence | 31 | 20 | 740 | 2 | 3.64 | 1.693 | Comparative Example |
| 14 | B | Absence | 31 | 200 | 740 | 2 | 3.52 | 1.719 | Invention Example |
| 15 | B | 830 | 65 | 20 | 740 | 2 | 3.59 | 1.702 | Comparative Example |
| 16 | B | 830 | 65 | 200 | 740 | 2 | 3.51 | 1.721 | Invention Example |
| 17 | B | 930 | 95 | 20 | 740 | 2 | 3.48 | 1.715 | Comparative Example |
| 18 | B | 930 | 95 | 200 | 740 | 2 | 3.43 | 1.723 | Invention Example |
| 19 | C | 840 | 63 | 20 | 740 | 2 | 2.65 | 1.692 | Comparative Example |
| 20 | C | 840 | 63 | 200 | 740 | 2 | 2.59 | 1.710 | Invention Example |
| 21 | D | Absence | 28 | 20 | 740 | 2 | 3.81 | 1.709 | Comparative Example |
| 22 | D | Absence | 28 | 200 | 740 | 2 | 3.64 | 1.732 | Invention Example |
| 23 | E | Absence | 24 | 20 | 740 | 2 | 3.76 | 1.715 | Comparative Example |
| 24 | E | Absence | 24 | 200 | 740 | 2 | 3.59 | 1.736 | Invention Example |
| 25 | F | Absence | 24 | 20 | 740 | 2 | 3.24 | 1.691 | Comparative Example |
| 26 | F | Absence | 24 | 200 | 740 | 2 | 3.18 | 1.715 | Invention Example |
| 27 | G | Absence | 16 | 200 | 740 | 2 | 4.32 | 1.703 | Comparative Example |
| 28 | H | Absence | 15 | 200 | 740 | 2 | 4.21 | 1.705 | Comparative Example |
| 29 | I | Absence | 18 | 200 | 740 | 2 | 4.18 | 1.706 | Comparative Example |
| 30 | J | Absence | 14 | 200 | 740 | 2 | 4.45 | 1.689 | Comparative Example |
| 31 | K | Absence | 16 | 200 | 740 | 2 | 4.41 | 1.691 | Comparative Example |
| 32 | L | Absence | 13 | 200 | 740 | 2 | 4.56 | 1.707 | Comparative Example |
| 33 | M | Absence | 28 | 200 | 740 | 2 | 3.63 | 1.729 | Invention Example |
| 34 | N | Absence | 26 | 200 | 740 | 2 | 3.58 | 1.745 | Invention Example |
| 35 | O | Absence | 28 | 200 | 740 | 2 | 3.56 | 1.742 | Invention Example |
| 36 | P | Absence | 33 | 200 | 740 | 2 | 3.43 | 1.731 | Invention Example |
| 37 | Q | Absence | 32 | 200 | 740 | 2 | 3.48 | 1.730 | Invention Example |
| 38 | R | Absence | 31 | 200 | 740 | 2 | 3.45 | 1.728 | Invention Example |

## Claims

1. A method for producing a non-oriented electrical steel sheet by hot rolling a steel slab having a chemical composition comprising C: not more than 0.0050 mass%, Si: not more than 5.0 mass%, Mn: not more than 3.0 mass%, P: not more than 0.2 mass%, S: not more than 0.005 mass%, Al: not more than 3.0 mass%, N: not more than 0.005 mass%, Ni: not more than 3.0 mass%, Cr: not more than 5.0 mass%, Ti: not more than 0.005 mass%, Nb: not more than 0.005 mass%, B: not more than 0.005 mass%, O: not more than 0.005 mass%, optionally one or two selected from Sn: 0.005-0.20 mass% and Sb: 0.005-0.20 mass%, optionally one or two or more selected from Ca: 0.0001-0.010 mass%, Mg: 0.0001-0.010 mass% and REM: 0.0001-0.010 mass%, and the remainder being Fe and inevitable impurities and subjecting the sheet to a cold rolling after a hot band annealing or without a hot band annealing and further to a finish annealing,
**characterized in that** P_{H20}/P_{H2} of an atmosphere in the finish annealing is not more than 0.1, and the heating in the finish annealing is conducted in two stages of performing an induction heating and subsequently a radiation heating, and the induction heating is conducted up to not lower than 720°C at an average heating rate of not less than 50°C/sec between 600°C and 700°C, and the heating rate by the radiation heating up to a soaking temperature is not less than 5°C/sec, and a time from the end of the induction heating to the start of the radiation heating is set to not more than 3 seconds.

2. The method for producing a non-oriented electrical steel sheet according to claim 1, wherein a ferrite grain size of a steel sheet structure before a final cold rolling in the cold rolling is set to not more than 70 µm.

## Patentansprüche

1. Verfahren zur Herstellung eines nichtorientierten Elektrostahlblechs durch Warmwalzen einer Stahlbramme mit einer chemischen Zusammensetzung, umfassend C: nicht mehr als 0,0050 Massen-%, Si: nicht mehr als 5,0 Massen-%, Mn: nicht mehr als 3,0 Massen-%, P: nicht mehr als 0,2 Massen-%, S: nicht mehr als 0,005 Massen-%, Al: nicht mehr als 3,0 Massen-%, N: nicht mehr als 0,005 Massen-%, Ni: nicht mehr als 3,0 Massen-%, Cr: nicht mehr als 5,0 Massen-%, Ti: nicht mehr als 0,005 Massen-%, Nb: nicht mehr als 0,005 Massen-%, B: nicht mehr als 0,005 Massen-%, O: nicht mehr als 0,005 Massen-%, gegebenenfalls eines oder zwei, ausgewählt aus Sn: 0,005-0,20 Massen-% und Sb: 0,005-0,20 Massen-%, gegebenenfalls eines oder zwei oder mehrere, ausgewählt aus Ca: 0,0001-0,010 Massen-%, Mg: 0,0001-0,010 Massen-% und SEM: 0,0001-0,010 Massen-%, und wobei der Rest Fe und unvermeidbare Verunreinigungen sind, und Kaltwalzen nach einem Warmbandglühen oder ohne Warmbandglühen und ferner Endglühen des Blechs,
**dadurch gekennzeichnet, dass** P_{H20}/P_{H2} einer Atmosphäre beim Endglühen nicht mehr als 0,1 beträgt und das Erwärmen beim Endglühen in zwei Stufen durchgeführt wird, wobei Induktionserwärmen und anschließend Strahlungserwärmen durchgeführt werden, und das Induktionserwärmen auf nicht niedriger als 720°C bei einer durchschnittlichen Erwärmungsrate von nicht weniger als 50°C/Sek zwischen 600°C und 700°C durchgeführt wird, und die Erwärmungsrate durch das Strahlungserwärmen auf eine Haltetemperatur nicht weniger als 5°C/Sek beträgt, und die Zeit vom Ende des Induktionserwärmens bis zum Beginn des Strahlungserwärmens auf nicht mehr als 3 Sekunden eingestellt ist.

2. Verfahren zur Herstellung eines nichtorientierten Elektrostahlblechs gemäß Anspruch 1, worin eine Ferritkorngröße einer Stahlblechstruktur vor dem abschließenden Kaltwalzen beim Kaltwalzen auf nicht mehr als 70 µm eingestellt ist.

## Revendications

1. Procédé de production d'une tôle magnétique en acier non orienté par le laminage à chaud d'une brame d'acier présentant une composition chimique comprenant C : pas plus de 0,0050 % en masse, Si : pas plus de 5,0 % en masse, Mn : pas plus de 3,0 % en masse, P : pas plus de 0,2 % en masse, S : pas plus de 0,005 % en masse, Al : pas plus de 3,0 % en masse, N : pas plus de 0,005 % en masse, Ni : pas plus de 3,0 % en masse, Cr : pas plus de 5,0 % en masse, Ti: pas plus de 0,005 % en masse, Nb : pas plus de 0,005 % en masse, B: pas plus de 0,005 % en masse, O: pas plus de 0,005 % en masse, facultativement un ou deux sélectionnés parmi Sn : 0,005 à 0,20 % en masse et Sb : 0,005 à 0,20 % en masse, facultativement un ou deux ou plus sélectionnés parmi Ca : 0,0001 à 0,010 % en masse, Mg : 0,0001 à 0,010 % en masse et REM: 0,0001 à 0,010 % en masse, et le reste étant Fe et les impuretés inévitables et la soumission de la tôle à un laminage à froid après un recuit en bande chaude ou sans recuit en bande chaude et en outre à un recuit de finition,
**caractérisé en ce que** P_{H2O}/Pₕ₂ d'une atmosphère dans le recuit de finition n'est pas supérieur à 0,1, et le chauffage dans le recuit de finition est effectué en deux étapes comprenant la mise en œuvre d'un chauffage par induction et ensuite d'un chauffage sous rayonnement, et le chauffage par induction est effectué jusqu'à pas moins de 720 °C à une vitesse moyenne de chauffage de pas moins de 50 °C/sec entre 600 °C et 700 °C, et la vitesse de chauffage par le chauffage sous rayonnement jusqu'à une température de trempe n'est pas inférieure à 5 °C/sec, et une durée à partir de la fin du chauffage par induction jusqu'au début du chauffage sous rayonnement est fixée à pas plus de 3 secondes.

2. Procédé de production d'une tôle magnétique en acier non orienté selon la revendication 1, dans lequel une taille de grain de ferrite d'une structure de tôle d'acier avant un laminage à froid final dans le laminage à froid est fixée à pas plus de 70 µm.
